(19) Europäisches Patentamt
European Patent Office
Office européen des brevets

(11) **EP 3 243 001 B1**

(12) **EUROPEAN PATENT SPECIFICATION**

(45) Date of publication and mention
of the grant of the patent:
**03.07.2019 Bulletin 2019/27**

(51) Int Cl.:
*F03B 13/18* (2006.01)    *F03B 13/20* (2006.01)
*E02B 9/08* (2006.01)    *F03B 13/16* (2006.01)
*F03B 15/00* (2006.01)    *G05B 15/02* (2006.01)

(21) Application number: **15876730.1**

(22) Date of filing: **17.12.2015**

(86) International application number:
**PCT/FI2015/050894**

(87) International publication number:
**WO 2016/110610 (14.07.2016 Gazette 2016/28)**

(54) **METHOD AND SYSTEM FOR ADJUSTING THE TORQUE OF A MASS AND SPINNING WHEEL ROTATOR IN A WAVE POWER PLANT**

VERFAHREN UND SYSTEM ZUR REGELUNG DES DREHMOMENTS EINES MASSE- UND SPINNRADROTORS IN EINEM WELLENKRAFTWERK

PROCÉDÉ ET SYSTÈME POUR AJUSTER LE COUPLE D'UNE MASSE ET DU ROTATEUR D'UNE ROUE D'ENTRAÎNEMENT DANS UNE USINE MARÉMOTRICE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.01.2015 FI 20155011**

(43) Date of publication of application:
**15.11.2017 Bulletin 2017/46**

(73) Proprietor: **Wello Oy
02270 Espoo (FI)**

(72) Inventor: **PAAKKINEN, Antti
02270 Espoo (FI)**

(74) Representative: **Sole, Timo
Leitzinger Oy,
Tammasaarenkatu 1
00180 Helsinki (FI)**

(56) References cited:
**EP-A1- 2 031 240      WO-A1-2012/103890
WO-A2-2012/007639      WO-A2-2013/156674
US-A1- 2013 334 821**

**Description**

The invention relates to a method and a system for adjusting the rotator of a wave power plant in terms of is torque. The torque of a rotator which rotates around a vertical shaft is partially or fully compensated for with a moment generated by an electric machine.

The Applicant's earlier international patent application WO2013/156674 A2 discloses one solution for optimizing the coordination of body inclinations and moments. There, the body has been fashioned as a vertical or inclined wall submerged to a sufficient depth. By making use of the internal flows of a wave there is established such a stage in the body's tilting that the moment induced by horizontal acceleration can also be exploited. This is not possible with bodies that are floating by complying with the direction of a wave surface. The moments generated by inclination and acceleration are now summed up into a dead mass torque. In the event of using a spinning wheel, the torque generated by the spinning wheel and the torque generated by the dead mass alternate during a revolution of the rotator and each torque works twice during the revolution, thereby producing torques repeated typically at intervals of about 90° and striving to rotate the rotator in the same direction of rotation. This arrangement is beneficial with bodies that are long in horizontal direction.

The Applicant's earlier international applications WO2014/001627 A1 and WO2015/040277 A1 disclose a type of wave power plant, wherein the body has a horizontal length in the same size range as its height. In this case, the operation can be further enhanced with arrangements by which the body is set in gyrating motion, i.e. the inclination of a rotator shaft is enabled to revolve around a theoretical vertical axis as opposed to the rotator shaft tilting back and forth. Thus, the rotator-turning moment by inclination is always available. Likewise, the spinning wheel-generated moment is continuous over the entire revolution.

It is prior known to regulate the compensating moment by adjusting the load of an electric machine such as a generator. However, the torque to be compensated for fluctuates non-linearly and in a manner difficult to anticipate. This makes the compensation adjustment challenging and the adjustment equipment complicated and expensive.

It is an objective of the invention to provide a method and a system by means of which the moment can be adjusted in a simpler, easier and more effective manner than before, thereby improving the operating reliability and performance output of a wave power plant while simplifying the adjustment system. A particular objective of the invention is also to enable the addition of a compensation factor based on spinning wheel forces to a compensation factor determined on the basis of mass forces.

This objective is attained with a method of the invention on the basis of features presented in the appended claim 1. The objective is also attained by means of the system features presented in claim 8. Preferred embodiments of the invention are presented in the dependent claims.

The method and system of the invention are particularly applicable for a wave power plant which is capable of generating as clean a gyration motion as possible for the rotator shaft. The combination of a gyrating motion as defined and a moment adjustment of the invention can be used to enable a continuous rotary motion and continuous energy production even in irregular wave. In other words, the invention can be used for improving the output performance and working capabilities of a wave power plant in a multitude of varying wave conditions.

Hence, it has been realized in the invention to create conditions for the adjustment of a compensating moment, e.g. in such a way that the rotation speed of a rotator can be maintained relatively constant, making it easy to synchronize the rotation speed with the existing wave conditions. The invention is particularly suitable for wave power plants, wherein tilting of the body plane occurs simultaneously both in a direction perpendicular to the plane and in a direction parallel to the plane, the combined motion thereby generating a gyration motion. In this context, the gyration motion refers to a conical motion path of the rotator shaft with the cone having a cross-section other than circular form, e.g. oval. As a result, the body and the rotator shaft have the inclination direction thereof revolving or rotating around a vertical axis principally in the rotating direction in response to the flows of waves. The period of waves determines a rotation speed for the body's tilting direction.

In addition, the invention also enables the utilization of a benefit disclosed in the Applicant's earlier patent application WO2013/156674 A2, namely that tilting and horizontal accelerations coincide with each other in such a phase that the moments of inclination/gravity and motion acceleration strengthen each other. In addition, the moment of a spinning wheel force can be utilized as a rotation equalizer for the rotator as desired. The result of this is a high and relative consistent moment and a high output performance.

The wave power plant provided with a compensating moment adjustment of the invention generates power at a high efficiency and in a fairly consistent manner irrespective of the wave size, because the length/height dimensions of typical natural waves are more or less constant.

The invention will now be illustrated and described even more precisely with reference to the accompanying drawings, in which:

fig. 1       shows a system diagram for executing a method of the invention;

fig. 2 illustrates the application of an adjustment of the invention to a rotator in the system of fig. 1;

fig. 3A shows an adjustment graph or compensation factor B for a fully compensating moment as a function of rotator lag as the rotator lag from the acceleration vector of fig. 2 is within an angular range of -PI - PI;

fig. 3B shows one ramp k which can be used for multiplying the lag in case it is desired that the wave power plant is generating, i.e. the rotator has an angle of lag which is positive;

fig. 3C shows a compensation graph determined according to a lag multiplied by the factor of fig. 3B;

fig. 3D shows an additional multiplication factor (S), which depends on the rotator's angular velocity and by which the compensation factor B can be multiplied for keeping the rotator speed close to a target speed, i.e. the speed corresponding to an average wave period;

fig. 3E shows one ramp which is used for prohibiting the rotation of a rotator in a negative direction;

fig. 4 shows a system diagram similar to that of fig. 1, relating to the compensation of a wlywheel section.

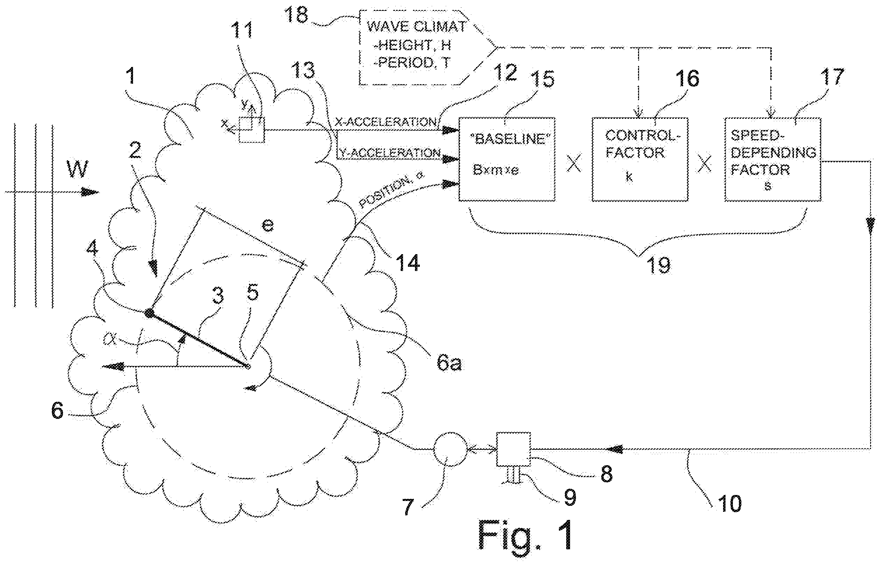

In fig. 1 is shown one preferred implementation for an adjustment system of the invention in a schematic view of principle. A rotator 2 and a body 1 can be structurally of any prior known type, for example of the type described in the above-cited applications. Not constituting an object of this invention, these are not discussed any further.

The vertical dimension of a submerged portion of the body 1 is typically larger than the horizontal dimension of the cross-section. Preferably, more than 80% of the body's height is under water and the body 1 is dimensioned to extend in vertical direction to such a depth at which wave motion is substantially present. The body 1 floats on water and is moored in such a way that when the body is contacted by a wave front W, the body either swings back and forth or performs a gyrating motion.

The rotator 2 is supported on the body so as to rotate around a vertical shaft 5. The rotator includes an arm 3 one end of which is mounted with bearings on the vertical shaft and the other end carries a heavy mass 4 having its mass denoted with the letter m. The mass 4 circulates along a path 6 e.g. in a clockwise direction. The rotator 2 drives a generator 7 which feeds electric power to an output line 9 by way of a converter 8. The rotator produces a moment to be compensated, which should be adjusted for making the rotator's angular position and angular velocity favorable with respect to movements of the body. The difference between the direction of the body's acceleration vector and the direction of the rotator is what generates a torque for the rotator shaft 5.

In this arrangement, the rotator 2 is able to make use not only a rotating moment produced by the body's inclination (gyration) and by gravity but also a moment produced by horizontal accelerations, i.e. by an acceleration vector projected onto a plane of rotation of the rotator. The acceleration in a pitch direction is parallel to the wave propagation direction. At the time of maximum acceleration, with a phase angle between the rotator's direction and the acceleration vector being as it should be (preferably 30-90 degrees), this moment works in a timely fashion in a right direction.

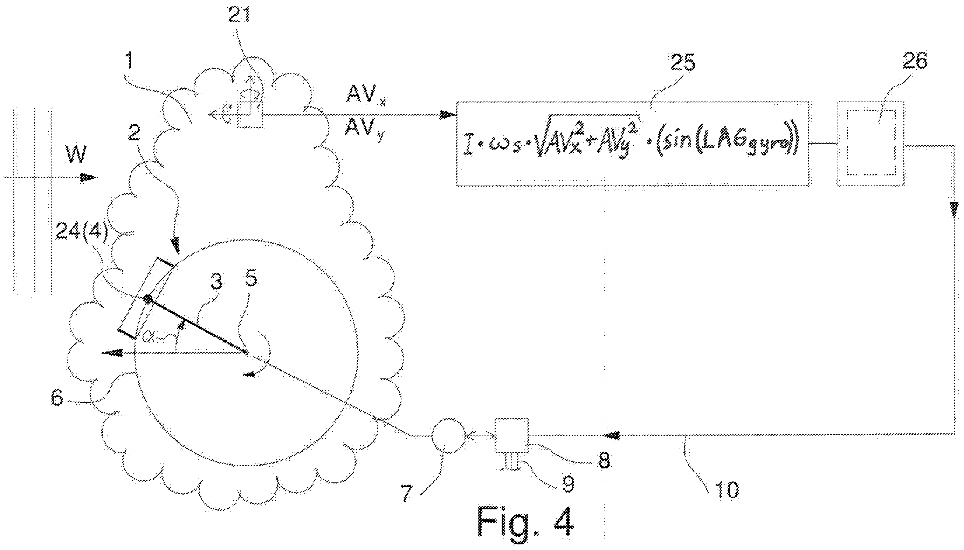

An acceleration sensor 11 is located to be essentially flush with the trajectory 6 of the rotator 2, e.g. adjacent to the trajectory or in the proximity of the vertical shaft 5. The acceleration sensor 11 is preferably a 3D acceleration sensor used for measuring accelerations in x, y and z directions and, regarding the spinning wheel rotator (Fig. 4), an acceleration and inclination speed sensor 21 (inertial sensor). Acceleration data and information about the rotator's angular position are transferred by way of signal paths 12, 13 and 14 into a block 15 included in a signal processing unit 19, with a compensating moment being calculated therein for basic adjustment.

For the basic adjustment, accelerations $ACC_x$ and $ACC_y$ for a given point of the body 1 will be measured in directions perpendicular to each other, which are co-directional with a track plane of the rotator, and there will be established a vector $V_{xy}$ of the measured accelerations which has a magnitude $\sqrt{ACC_x^2 + ACC_y^2}$ and a direction $\alpha_{ACC}$. There is further monitored a direction of the rotator 2, i.e. an angular position $\alpha$, and its lag $\alpha_{LAG}$ is determined from the direction $\alpha_{ACC}$ of the acceleration vector $V_{xy}$. By means of this information is determined a compensation factor B which can be used for adjusting the compensating moment. Sub-factors for the compensation factor B include the magnitude of the acceleration vector $V_{xy}$ and the sine of the angle of lag (sin $\alpha_{LAG}$).

Thus, the compensation factor B is obtained from a formula

$$B = \sqrt{ACC_x^2 + ACC_y^2} \cdot \sin \alpha_{LAG} \qquad (1)$$

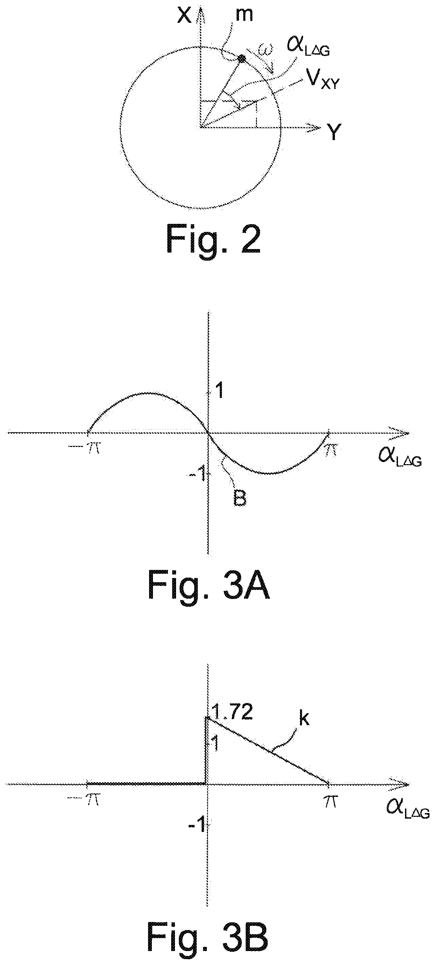

In fig. 3A is illustrated a relationship between the thereby established compensation factor B (basic adjustment graph/Baseline) and the lag $\alpha_{LAG}$. Therefore, the rotator lag can be always represented as an angle within the range of -pi - pi. The compensation factor B is zero as the sign changes at +/- pi.

When considering a mass m of the rotator and a length e of the arm 3, the result is a useful compensating moment

$$T_{comp} = B \cdot m \cdot e \qquad (2)$$

The use of this compensating moment $T_{comp}$ in an electric machine, such as in a generator 7, enables a partial or full compensation for the rotator torque. In the system of fig. 1, the compensation factor B and the compensating moment (formula 2) are calculated in the unit 15 on the basis of sensor data.

If the compensation factor B is used as such, i.e. with a 100% effect, the compensating moment strives to keep the rotator's speed of rotation unchanged, even though the body's acceleration should fluctuate.

The compensation factor B can be multiplied with a factor (Fig. 3B), whereby 0 stands for no compensation at all, 1 stands for 100% compensation, and values upwards of 1 stand for excessive compensation, whereby the rotator is left further behind from the body's inclination direction, i.e. the lag tends to increase.

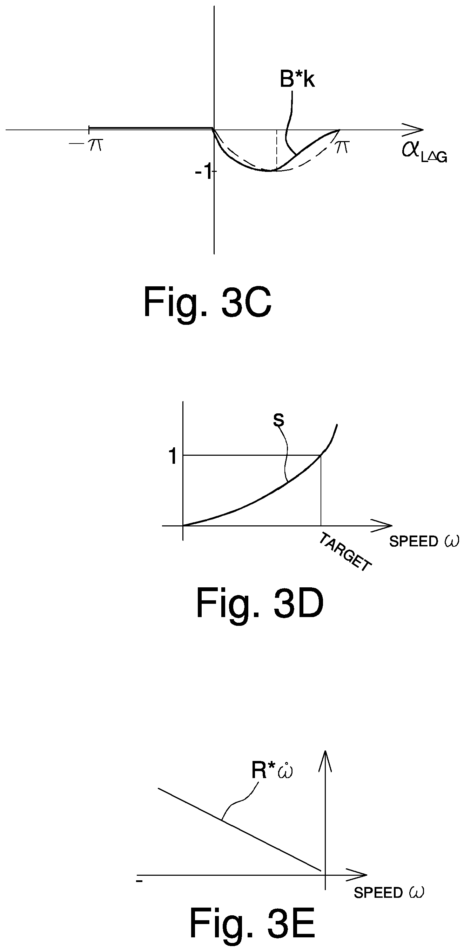

If the wave power plant is desired to be generating all the time, the compensation factor with a negative angle of lag can be left to be zero as the rotator is rotating in a clockwise direction (a positive speed), and a positive angle of lag can be multiplied with the ramp shown in fig. 3B. Thus, the angle of lag ($\alpha_{LAG}$) used in determining the compensation factor B is multiplied by a ramp type correction factor k, the value of which diminishes when passing from value 0 to value PI for the angle of lag. The correction factor k is preferably selected in such a way that a corrected compensation factor B k strives to drive the rotator to an angle of lag ($\alpha_{LAG}$), which is within the range of 1/3 PI - ½ PI. This is shown more precisely in fig. 3C, wherein the compensation graph B k, which strives in ideal conditions to drive the rotator to a lag which corresponds to the intersection point of graphs present in fig. 3C.

The multiplication factor k can be determined by using information obtained from a wave condition sensor 18 about the wave height. An optimum value for the multiplication factor k with regard to the wave height or other wave condition information can be searched experimentally.

In addition, the compensation adjustment can be improved by keeping the rotator speed close to a target speed, i.e. the speed corresponding to an average wave period. Therefore, the compensation factor B can be multiplied by a speed-dependent additional multiplication factor S, which is obtained by monitoring the rotator's angular velocity and the average wave period. The latter is obtained either directly from an acceleration sensor measuring accelerations of the body or from the separate wave condition sensor 18. Fig. 3D depicts an example of the speed-dependent additional multiplication factor S, which is for example a quadratic function.

Hence, the torque of a rotator capable of being compensated for by an electric machine (which at the same time is a moment that rotates the generator 7) is:

$$T(\alpha_{LAG}, \omega) = B(\alpha_{LAG}) \cdot m \cdot e \cdot k(\alpha_{LAG}) \cdot S(\omega) \text{ , when } \omega > 0 \qquad (3)$$

This magnitude of moment, which changes non-linearly according to wave conditions, will be fed as an adjustment variable along a line 10 to the converter 8, which strives to maintain the moment at a value matching the adjustment variable.

Rotation of the rotator in a negative direction can be denied and a restart expedited thereby with the ramp presented in fig. 3E. In this case, the moment to be fed to an electric machine is:

$$T = R \cdot \omega, \text{ when } \omega \leq 0. \qquad (4)$$

The compensation adjustment shall further involve the input of spinning wheel forces. This will be discussed next with reference to fig. 4. In fig. 4, the generator 7 is collective for both spinning wheel and mass rotator sections. The body's rotation speed, which is measured by an inertial sensor 21, is the earlier described gyrating motion. The inertial sensor 21 measures the body's rotation speed as components, i.e. rotations around x, y and z axes. (In this case, primarily around horizontal x and y axes and the z component can be disregarded). In a signal processing and computing unit (25) is established a resultant of x and y directed angular velocities (AVx and AVy) of the rotation speed and there is calculated an angular deviation (LAGgyro) between the established resultant angular velocity and a direction ($\alpha$) of the rotator.

The mass forces are processed as described above. The spinning wheel forces are processed in a respective manner, but the Vx-y acceleration must be replaced with a rotation speed AVx-y of the body's inclination (from the inertial sensor 21), and the mass must be replaced with a spinning wheel force which is dependent on the spinning wheel's inertia I and rotating speed $\omega_s$. Thus, the compensation factor based on spinning wheel force is

$$B_{AV} = \sqrt{AV_x^2 + AV_y^2} \cdot \omega_{spin} \cdot \sin(LAG_{gyro}) \qquad (5)$$

wherein

AV = an angular velocity of the body's rotary motion or gyrating motion, which is obtained from the inertial sensor 21. The square root expression is thus a resultant of the x and y directed angular velocities;
LAGgyro = an angular deviation between the AV resultant and a direction $\alpha$ of the rotator; and
$\omega_s$ = a rotation speed of the spinning wheel.

The compensating moment for spinning wheel forces is obtained by multiplying a compensation factor $B_{AV}$ with the spinning wheel's inertia I.

It should be noted that the lag LAGgyro used in the formula is calculated now from an angle between rotation vector (from the inertial sensor) of the body and the rotator direction.

What has been examined in the foregoing formulae is an absolute value of the compensation factor. This moment is delivered onto the control as counter to the direction of rotation as the rotator is rotating in a selected operating direction. Thus, the question is about generating. This applies also to a spinning wheel section as long as the spinning wheel has such a direction of rotation that the spinning wheel's top edge travels in a direction of rotation desired for the rotator.

If the use of compensation is desired in conditions other than those mentioned above, the sine rule present in formulae (1) and (5) can be marked with a minus sign. Thus, the question is not about generating but the running of a rotator as a motor, which can be used occasionally to improve the continuity of action.

The compensating moment for mass forces (including possible adjustment weighting) and the compensating moment for spinning wheel forces (including possible adjustment weighting) are finally summed up and delivered to the generator 7.

The moment arriving from a spinning wheel 24 at the shaft of the generator 7 is calculated from parameters of the spinning wheel. This moment can be delivered as a counter-torque to the generator 7 even the whole time in full. In this case, the lag is adjusted with a compensation factor of the mass rotator. If desired, the adjustability of the lag can be increased by calculating into the spinning wheel section's compensation factor a place-dependent increasing or decreasing multiplication factor in a manner similar to fig. 1. In the adjustment diagram of fig. 4, these possible additional adjustment multiplication factors can be calculated in a block 26. The spinning wheel's mass and all peripheral equipment present in the rotator function of course as "a mass" of the mass rotator section.

## Claims

**1.** A method for adjusting the torque of a mass and gyro rotator in a wave power plant, said method comprising compensating partially or completely the torque of a rotator, which rotates around a vertical shaft, with a compensating moment which is produced by an electric machine, said method comprising measuring acceleration components ($ACC_x$ and $ACC_y$) for a given point of the wave power plant's floating body (1) in directions perpendicular to each other as projected onto the rotator's plane of rotation, establishing a vector ($V_{xy}$) with a magnitude and direction ($\alpha_{ACC}$) for the measured acceleration components, monitoring the direction or angular position ($\alpha$) of a rotator (2) and determining its lag ($\alpha_{LAG}$) from the direction ($\alpha_{ACC}$) of the acceleration components' vector, and adjusting the compensating moment as dependent on a compensation factor (B) whose sub-factors are the magnitude of the vector ($V_{xy}$) of the acceleration components of the body and the sine of the angle of lag ($\sin \alpha_{LAG}$), **characterized in that** the method comprises adjusting the compensating moment not only as dependent on the compensation factor (B) but also as dependent on a compensation factor ($B_{AV}$) based on spinning wheel forces, therefore comprising

- using an inertial sensor (21) to measure a rotation speed (AVx-y) of inclination;

- establishing a resultant of x and y directed angular velocities (AVx and AVy) of the rotation speed;
- calculating an angular deviation (LAGgyro) between the resultant angular velocity and the rotator's direction ($\alpha$);
- measuring the rotation speed of a spinning wheel (24);
- establishing the spinning wheel section's compensation factor ($B_{AV}$), based on spinning wheel forces, as a product whose factors are a spinning wheel rotation speed ($\omega_s$), the resultant of the x and y directed angular velocities of the body's inclination, and the sine of the aforesaid angular deviation (LAGgyro);
and determining a compensating moment for the spinning wheel section by multiplying the spinning wheel section's compensation factor ($B_{AV}$) with an inertia (I) of the spinning wheel.

2. A method according to claim 1, **characterized in that** the rotator's rotation speed is striven to be kept constant by maintaining the compensating moment equal to the compensation factor (B)

3. A method according to claim 1 or 2, **characterized in that** the compensation factor (B) is multiplied with a multiplying factor, whereby factor 0 stands for no compensation at all, factor 1 stands for a 100% compensation, i.e. the situation of claim 2, and factor values higher than 1 stand for an excessive compensation with the rotator's angle of lag ($\alpha_{LAG}$) increasing.

4. A method according to any of claims 1-3, **characterized in that** the angle of lag ($\alpha_{LAG}$) used in determining the compensation factor (B) is multiplied by a ramp type correction factor (k) whose value decreases when proceeding from value 0 to value PI of the angle of lag, and the correction factor (k) is selected in such a way that a corrected compensation factor (k B) strives to drive the rotator to an angle of lag ($\alpha_{LAG}$) which is within the range of 1/3 PI - ½ PI.

5. A method according to any of claims 1-4, **characterized in that** the rotator's angular velocity and an average wave period are monitored and, in order to maintain the rotator's speed close to a target speed, i.e. the speed matching the average wave period, the compensation factor (B) is multiplied with a speed-dependent additional multiplication factor (S).

6. A method according to claim 5, **characterized in that** the additional multiplication factor is a quadratic function whose value increases as the rotator's angular velocity increases.

7. A method according to any of claims 1-6, **characterized in that** the rotator's rotation in a negative direction is denied with a compensating moment.

8. A system for adjusting the torque of a mass rotator or a mass and spinning wheel rotator, said system comprising a wave power plant's floating body (1), a mass rotator (2) rotating around a vertical shaft, and an electric machine (7) which produces a compensating moment for compensating the rotator's torque partially or completely, an acceleration sensor (11) used for measuring acceleration components ($ACC_x$ and $ACC_y$) for a given point of the wave power plant's floating body (1) in directions perpendicular to each other as projected onto the rotator's plane of rotation, signal processing means (19) used for establishing a vector ($V_{xy}$) with a magnitude and direction ($\alpha_{ACC}$) for the measured acceleration components, means (14) used for monitoring a direction or angular position ($\alpha$) of the rotator (2), the signal processing means (19) being adapted to determine a lag ($\alpha_{LAG}$) of the angular position ($\alpha$) from the acceleration vector's direction ($\alpha_{ACC}$) and said signal processing means (19) are adapted to produce a compensation factor (B) which is used for adjusting the compensating moment and whose sub-factors are the magnitude of the body's acceleration components ($V_{xy}$) and the sine of the angle of lag (sin $\alpha_{LAG}$), **characterized in that** the compensating moment is adapted to be adjusted not only as dependent on the compensation factor (B) but also as dependent on a compensation factor ($B_{AV}$) based on spinning wheel forces, the system therefore comprising

- an inertial sensor (21) for measuring a rotation speed (AVx-y) of the body's inclination;
- a signal processing and computing unit (25) for establishing a resultant of x and y directed angular velocities (AVx and AVy) of the rotation speed and for calculating an angular deviation (LAGgyro) between the resultant angular velocity and the rotator's direction ($\alpha$);
- means for measuring the rotation speed of a spinning wheel (24);
the signal processing and computing unit (25) being adapted to establish a compensation factor ($B_{AV}$), based on spinning wheel forces, as a product whose factors are a spinning wheel speed ($\omega_s$), the resultant of the x and y directed angular velocities of the body's inclination, and the sine of the aforesaid angular deviation (LAGgyro).

9. A system according to claim 8, **characterized in that** the signal processing means (19) include elements (16) for multiplying the compensation factor (B) with an adjustment factor (k) which has an effect on the magnitude of the angle of lag ($\alpha$LAG).

10. A system according to claim 9, **characterized in that** the system includes means (6a, 14, 15) for monitoring the rotator's angular velocity and means (18, 17) for monitoring the average wave period, and that the signal processing means (19) include elements (17) for multiplying the compensation factor (B) with an angular velocity-dependent additional multiplication factor (S) for maintaining the rotator's speed close to a target speed, i.e. the speed matching the average wave period.

11. A system according to any of claims 8-10, **characterized in that** more than 80% of the body's height is in submersion and the body is dimensioned to extend in vertical direction to such a depth where wave motion is essentially present, and that the acceleration sensor (11) is located substantially flush with the plane of a trajectory (6) of the rotator (2).

**Patentansprüche**

1. Verfahren zum Anpassen des Drehmoments eines Massen- und Kreiselrotators in einem Wellenkraftwerk, wobei das Verfahren das teilweise oder vollständige Ausgleichen des Drehmoments eines Rotators, der um eine vertikale Welle rotiert, mit einem Ausgleichsmoment, das von einer elektrischen Maschine erzeugt wird, umfasst, wobei das Verfahren das Messen von Beschleunigungskomponenten ($ACC_x$ und $ACC_y$) für einen gegebenen Punkt des Schwimmkörpers (1) des Wellenkraftwerks in zueinander senkrechten Richtungen wie auf die Rotationsebene des Rotators projiziert, das Erstellen eines Vektors ($V_{xy}$) mit einer Größe und Richtung ($\alpha_{ACC}$) für die gemessenen Beschleunigungskomponenten, das Überwachen der Richtung oder Winkelposition ($\alpha$) eines Rotators (2) und das Bestimmen seines Nachlaufs ($\alpha_{LAG}$) von der Richtung ($\alpha_{ACC}$) des Vektors der Beschleunigungskomponenten und das Anpassen des Ausgleichsmoments abhängig von einem Ausgleichsfaktor (B), dessen Subfaktoren die Größe des Vektors ($V_{xy}$) der Beschleunigungskomponenten des Körpers und der Sinus des Winkels des Nachlaufs (sin $\alpha_{LAG}$) sind, **dadurch gekennzeichnet, dass** das Verfahren das Anpassen des Ausgleichsmoments nicht nur als abhängig von dem Ausgleichsfaktor (B) sondern auch als abhängig von einem Ausgleichsfaktor ($B_{AV}$) basierend auf Drehradkräften umfasst, deshalb umfassend

   - Verwenden eines Trägheitssensors (21), um eine Neigungsdrehzahl (AVx-y) zu messen;
   - Festlegen einer Resultante von x- und y-gerichteten Winkelgeschwindigkeiten (AVx und AVy) der Rotationsgeschwindigkeit;
   - Berechnen einer Winkelabweichung (LAGgyro) zwischen der resultierenden Winkelgeschwindigkeit und der Richtung ($\alpha$) des Rotators;
   - Messen der Drehzahl eines Drehrads (24);
   - Festlegen des Ausgleichsfaktors ($B_{AV}$) des Drehradabschnitts basierend auf Drehradkräften als ein Produkt, dessen Faktoren eine Drehraddrehzahl ($\omega_s$) sind, die Resultante der x- und y-gerichteten Winkelgeschwindigkeiten der Körperneigung und der Sinus der vorgenannten Winkelabweichung (LAGgyro); und Bestimmen eines Ausgleichsmoments für den Drehradabschnitt durch Multiplizieren des Ausgleichsfaktors ($B_{av}$) des Drehradabschnitts mit einer Trägheit (I) des Drehrads.

2. Verfahren nach Anspruch 1, **dadurch gekennzeichnet, dass** durch Aufrechterhaltung des Ausgleichsmoments, das gleich dem Ausgleichsfaktor (B) ist, angestrebt wird, die Drehzahl des Rotators konstant zu halten.

3. Verfahren nach Anspruch 1 oder 2, **dadurch gekennzeichnet, dass** der Ausgleichsfaktor (B) mit einem Multiplikationsfaktor multipliziert wird, wobei Faktor 0 für überhaupt keinen Ausgleich steht, Faktor 1 für einen 100%igen Ausgleich steht, d. h. die Situation von Anspruch 2, und höhere Faktorwerte als 1 für einen übermäßigen Ausgleich mit zunehmendem Nachlaufwinkel ($\alpha_{LAG}$) des Rotators stehen.

4. Verfahren nach einem der Ansprüche 1-3, **dadurch gekennzeichnet, dass** der bei der Bestimmung des Ausgleichsfaktors (B) verwendete Nachlaufwinkel ($\alpha_{LAG}$) mit einem anstiegsartigen Korrekturfaktor (k) multipliziert wird, dessen Wert beim Übergang vom Wert 0 zum Wert PI des Nachlaufwinkels abnimmt, und der Korrekturfaktor (k) derart gewählt wird, dass ein korrigierter Ausgleichsfaktor (k B) versucht, den Rotator bis zu einem Nachlaufwinkel ($\alpha_{LAG}$) anzutreiben, der im Bereich von 1/3 PI - ½ PI liegt.

5. Verfahren nach einem der Ansprüche 1-4, **dadurch gekennzeichnet, dass** die Winkelgeschwindigkeit des Rotators und eine durchschnittliche Wellenperiode überwacht werden und, um die Drehzahl des Rotators nahe einer Solldrehzahl zu halten, d. h. der Drehzahl, die der durchschnittlichen Wellenperiode entspricht, wird der Ausgleichsfaktor (B) mit einem geschwindigkeitsabhängigen zusätzlichen Multiplikationsfaktor (S) multipliziert.

**6.** Verfahren nach Anspruch 5, **dadurch gekennzeichnet, dass** der zusätzliche Multiplikationsfaktor eine quadratische Funktion ist, deren Wert mit zunehmender Winkelgeschwindigkeit des Rotators zunimmt.

**7.** Verfahren nach einem der Ansprüche 1-6, **dadurch gekennzeichnet, dass** die Rotation des Rotators in negativer Richtung mit einem Ausgleichsmoment verweigert wird.

**8.** System zum Anpassen des Drehmoments eines Masserotators oder eines Masse- und Drehradrotators, wobei das System einen Schwimmkörper (1) des Wellenkraftwerks, einen Masserotator (2), der sich um eine vertikale Welle dreht, und eine elektrische Maschine (7), die ein Ausgleichsmoment zum teilweisen oder vollständigen Ausgleichen des Drehmoments des Rotators erzeugt, einen Beschleunigungssensor (11), der zum Messen von Beschleunigungskomponenten ($ACC_X$ und $ACC_Y$) für einen gegebenen Punkt des Schwimmkörpers (1) des Wellenkraftwerks in zueinander senkrechten Richtungen wie auf die Rotationsebene des Rotators projiziert verwendet wird, eine Signalverarbeitungseinrichtung (19), die zum Erstellen eines Vektors ($V_{xy}$) mit einer Größe und Richtung ($\alpha_{ACC}$) für die gemessenen Beschleunigungskomponenten verwendet wird, eine Einrichtung (14), die zum Überwachen einer Richtung oder Winkelposition ($\alpha$) des Rotators (2) verwendet wird, wobei die Signalverarbeitungseinrichtung (19) ausgelegt ist, um einen Nachlauf ($\alpha_{LAG}$) der Winkelposition ($\alpha$) von der Richtung ($\alpha_{ACC}$) des Beschleunigungsvektors zu bestimmen, und die Signalverarbeitungseinrichtung (19) ausgelegt ist, um einen Ausgleichsfaktor (B) zu erzeugen, dessen Subfaktoren die Größe der Beschleunigungskomponenten ($V_{xy}$) des Körpers und der Sinus des Nachlaufwinkels ($\sin \alpha_{LAG}$) sind, **dadurch gekennzeichnet, dass** das Ausgleichsmoment ausgelegt ist, um nicht nur als abhängig von dem Ausgleichsfaktor (B) sondern auch als abhängig von einem Ausgleichsfaktor ($B_{AV}$) basierend auf Drehradkräften eingestellt zu werden, wobei das System deshalb Folgendes umfasst

- einen Trägheitssensor (21) zum Messen einer Neigungsdrehzahl (AVx-y) des Körpers;
- eine Signalverarbeitungs- und Recheneinheit (25) zum Festlegen einer Resultante von x- und y-gerichteten Winkelgeschwindigkeiten (AVx und AVy) der Drehzahl und zum Berechnen einer Winkelabweichung (LAGgyro) zwischen der resultierenden Winkelgeschwindigkeit und der Richtung ($\alpha$) des Rotators;
- eine Einrichtung zum Messen der Drehzahl eines Drehrads (24);
wobei die Signalverarbeitungs- und Recheneinheit (25) ausgelegt ist, um einen Ausgleichsfaktor ($B_{AV}$) basierend auf Drehradkräften als ein Produkt festzulegen, dessen Faktoren eine Drehraddrehzahl ($\omega_s$), die Resultante der x- und y-gerichteten Winkelgeschwindigkeiten der Körperneigung und der Sinus der vorgenannten Winkelabweichung (LAGgyro) sind.

**9.** System nach Anspruch 8, **dadurch gekennzeichnet, dass** die Signalverarbeitungseinrichtung (19) Elemente (16) zum Multiplizieren des Ausgleichsfaktors (B) mit einem Anpassungsfaktor (k) enthält, der sich auf die Größe des Nachlaufwinkels ($\alpha_{LAG}$) auswirkt.

**10.** System nach Anspruch 9, **dadurch gekennzeichnet, dass** das System Einrichtungen (6a, 14, 15) zum Überwachen der Winkelgeschwindigkeit des Rotators und Einrichtungen (18, 17) zum Überwachen der durchschnittlichen Wellenperiode enthält, und dass die Signalverarbeitungseinrichtung (19) Elemente (17) zum Multiplizieren des Ausgleichsfaktors (B) mit einem winkelgeschwindigkeitsabhängigen zusätzlichen Multiplikationsfaktor (S) zum Aufrechterhalten der Drehzahl des Rotators nahe einer Solldrehzahl, d. h. der Drehzahl, die der durchschnittlichen Wellenperiode entspricht, enthält.

**11.** System nach einem der Ansprüche 8-10, **dadurch gekennzeichnet, dass** mehr als 80% der Körperhöhe eingetaucht sind und der Körper so dimensioniert ist, dass er sich in vertikaler Richtung bis zu einer solchen Tiefe erstreckt, in der im Wesentlichen eine Wellenbewegung vorhanden ist, und dass der Beschleunigungssensor (11) im Wesentlichen bündig mit der Ebene einer Bahn (6) des Rotators (2) liegt.

**Revendications**

**1.** Procédé pour le réglage du couple d'une masse et d'un rotor gyroscopique dans une centrale houlomotrice, ledit procédé comprenant la compensation partielle ou complète du couple d'un rotor tournant autour d'un arbre vertical, avec un moment de compensation produit par une machine électrique, ledit procédé comprenant la mesure de

composants d'accélération ($ACC_x$ et $ACC_y$) pour un point donné du corps flottant (1) de la centrale houlomotrice dans des directions perpendiculaires les unes aux autres, lorsque celui-ci est projeté sur le plan de rotation du rotor, l'établissement d'un vecteur ($V_{xy}$) avec une ampleur et une direction ($\alpha_{ACC}$) pour les composants d'accélération mesurés, la surveillance de la direction ou de la position angulaire ($\alpha$) d'un rotor (2) et la détermination de son décalage ($\alpha_{LAG}$) par rapport à la direction ($\alpha_{ACC}$) du vecteur de composants d'accélération, et le réglage du moment de compensation dans la mesure où celui-ci dépend d'un facteur de compensation (B) dont les sous-facteurs sont l'ampleur du vecteur ($V_{xy}$) des composants d'accélération du corps et le sinus de l'angle de décalage (sin $\alpha_{LAG}$), **caractérisé en ce que** le procédé comprend le réglage du moment de compensation non seulement dans la mesure où celui-ci dépend du facteur de compensation (B), mais aussi dans la mesure où celui-ci dépend d'un facteur de compensation ($B_{AV}$) basé sur des forces de roue en rotation, comprenant par conséquent

- l'utilisation d'un capteur inertiel (21) pour mesurer une vitesse de rotation (AVx-y) d'inclinaison ;
- l'établissement d'une résultante de vitesses angulaires dirigées x et y (AVx et Avy) de la vitesse de rotation ;
- le calcul d'une déviation angulaire (LAGgyro) entre la vitesse angulaire résultante et la direction du rotor ($\alpha$) ;
- la mesure de la vitesse de rotation d'une roue en rotation (24) ;
- l'établissement du facteur de compensation de la section de roue en rotation ($B_{AV}$), sur la base de forces de roue en rotation, comme un produit dont les facteurs sont une vitesse de rotation de roue en rotation ($\omega_s$), la résultante des vitesses angulaires dirigées x et y de l'inclinaison du corps, et le sinus de la déviation angulaire (LAGgyro) citée ci-dessus ;
- et la détermination d'un moment de compensation pour la section de roue en rotation, par multiplication du facteur de compensation de la section de roue en rotation ($B_{AV}$) par une inertie (I) de la roue en rotation.

2. Procédé selon la revendication 1, **caractérisé en ce que** la vitesse de rotation du rotor est forcée de rester constante en maintenant le moment de compensation égal au facteur de compensation (B).

3. Procédé selon la revendication 1 ou 2, **caractérisé en ce que** le facteur de compensation (B) est multiplié par un facteur de multiplication, moyennant quoi le facteur 0 représente une compensation nulle, le facteur 1 représente une compensation de 100%, c'est-à-dire la situation de la revendication 2, et des valeurs de facteur supérieures à 1 représentent une compensation excessive, avec l'angle de rotation du décalage ($\alpha_{LAG}$) croissant.

4. Procédé selon l'une quelconque des revendications 1 à 3, **caractérisé en ce que** l'angle du décalage ($\alpha_{LAG}$) utilisé dans la détermination du facteur de compensation (B) est multiplié par un facteur de correction de type rampe (k), dont la valeur diminue en allant de la valeur 0 à la valeur PI de l'angle de décalage, et le facteur de correction (k) est choisi de telle façon qu'un facteur de compensation corrigé (k B) vise à entraîner le rotor vers un angle de décalage ($\alpha_{LAG}$) compris dans la plage de 1/3 PI à ½ PI.

5. Procédé selon l'une quelconque des revendications 1 à 4, **caractérisé en ce que** la vitesse angulaire du rotor et une période de vague moyenne sont surveillées et, pour maintenir la vitesse du rotor proche d'une vitesse cible, c'est-à-dire la vitesse adaptée à la période de vague moyenne, le facteur de compensation (B) est multiplié par un facteur de multiplication supplémentaire dépendant de la vitesse (S).

6. Procédé selon la revendication 5, **caractérisé en ce que** le facteur de multiplication supplémentaire est une fonction quadratique dont la valeur augmente tandis que la vitesse angulaire du rotor augmente.

7. Procédé selon l'une quelconque des revendications 1 à 6, **caractérisé en ce que** la rotation du rotor dans une direction négative est refusée avec un moment de compensation.

8. Système pour le réglage du couple d'un rotor de masse ou d'une masse et d'un rotor à roue en rotation, ledit système comprenant un corps flottant (1) de centrale houlomotrice, un rotor de masse (2) tournant autour d'un arbre vertical, et une machine électrique (7) produisant un moment de compensation destiné à compenser partiellement ou complètement le couple du rotor, un capteur d'accélération (11) utilisé pour mesurer des composants d'accélération ($ACC_x$ et $ACC_y$) pour un point donné du corps flottant (1) de la centrale houlomotrice dans des directions perpendiculaires les unes aux autres lorsque celui-ci est projeté sur le plan de rotation du rotor, des moyens de traitement de signal (19) utilisés pour établir un vecteur ($V_{xy}$) avec une ampleur et une direction ($\alpha_{ACC}$) pour les composants d'accélération mesurés, un moyen (14) utilisé pour surveiller une direction ou une position angulaire ($\alpha$) du rotor (2), les moyens de traitement de signal (19) étant adaptés pour déterminer un décalage ($\alpha_{LAG}$) de la position angulaire ($\alpha$) par rapport à la direction du vecteur d'accélération ($\alpha_{ACC}$) et lesdits moyens de traitement de signal (19) étant adaptés pour produire un facteur de compensation (B) utilisé pour régler le moment de compensation et dont les sous-facteurs sont l'ampleur des composants d'accélération du corps ($V_{xy}$) et le sinus de l'angle de décalage (sin $\alpha_{LAG}$), **caractérisé en ce que** le moment de compensation est adapté pour être réglé non seulement dans la mesure où il dépend du facteur de compensation (B) mais aussi dans la mesure où il dépend d'un facteur de compensation ($B_{AV}$) basé sur des forces de roue en rotation, le système comprenant par conséquent

- un capteur inertiel (21) destiné à mesurer une vitesse de rotation (AVx-y) de l'inclinaison du corps ;
- une unité de traitement de signal et de calcul (25) destiné à établir une résultante de vitesses angulaires dirigées x et y (AVx et Avy) de la vitesse de rotation, et à calculer une déviation angulaire (LAGgyro) entre la vitesse angulaire résultante et la direction du rotor ($\alpha$) ;
- un moyen destiné à mesurer la vitesse de rotation d'une roue en rotation (24) ;
l'unité de traitement de signal et de calcul (25) étant adaptée pour établir un facteur de compensation ($B_{AV}$), sur la base de forces de roue en rotation, comme un produit dont les facteurs sont une vitesse de rotation de roue en rotation ($\omega_s$), la résultante des vitesses angulaires dirigées x et y de l'inclinaison du corps, et le sinus de la déviation angulaire (LAGgyro) citée ci-dessus.

9.  Système selon la revendication 8, **caractérisé en ce que** les moyens de traitement de signal (19) incluent des éléments (16) permettant de multiplier le facteur de compensation (B) par un facteur de réglage (k) ayant un effet sur l'ampleur de l'angle de décalage ($\alpha_{LAG}$).

10. Système selon la revendication 9, **caractérisé en ce que** le système comprend des moyens (6a, 14, 15) destinés à surveiller la vitesse angulaire du rotor et des moyens (18, 17) destinés à surveiller la période de vague moyenne, et **en ce que** les moyens de traitement de signal (19) incluent des éléments (17) destinés à multiplier le facteur de compensation (B) par un facteur de multiplication supplémentaire dépendant de la vitesse angulaire (S) pour maintenir la vitesse de rotation proche d'une vitesse cible, c'est-à-dire la vitesse adaptée à la période de vague moyenne.

11. Système selon l'une quelconque des revendications 8 à 10, **caractérisé en ce que** plus de 80% de la hauteur du corps est submergée et le corps est dimensionné pour s'étendre dans une direction verticale jusqu'à une profondeur où le mouvement des vagues est essentiellement présent, et **en ce que** le capteur d'accélération (11) est substantiellement en affleurement avec le plan d'une trajectoire (6) du rotor (2).

Fig. 1

Fig. 2

Fig. 3A

Fig. 3B

## Fig. 3C

## Fig. 3D

## Fig. 3E

$$I \cdot \omega_s \cdot \sqrt{AV_x^2 + AV_y^2} \cdot (\sin(LAG_{gyro}))$$

AV_x
AV_y

W

21
1
2
24(4)
3
5
α
6
7
9
8
10
25
26

Fig. 4

EP 3 243 001 B1

**EP 3 243 001 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013156674 A2
- WO 2014001627 A1
- WO 2015040277 A1